# EUROPÄISCHE PATENTSCHRIFT

(11) **EP 3 795 552 B1**
(45) Veröffentlichungstag und Bekanntmachung des Hinweises auf die Patenterteilung: **23.03.2022**
(21) Anmeldenummer: 20197838.4
(22) Anmeldetag: 23.09.2020
(51) Int. Cl.: C04B 26/16, E04B 2/86, B28B 19/00, B32B 5/18, B32B 13/04, B32B 13/06, B32B 15/04, B32B 15/18

(54) **DICHTE, SPANNUNGSFREIE BETON-STAHL-VERBINDUNG**
TIGHT, STRESS-FREE CONCRETE-STEEL CONNECTION
RACCORDEMENT BÉTON-ACIER ÉTANCHE ET SANS TENSION

(30) Priorität: 23.09.2019 DE 102019125557
(43) Veröffentlichungstag der Anmeldung: 24.03.2021
(73) Patentinhaber: TL PATWO GbR mit Patrick Fust, Wolfgang Tschanun, Thomas Zundel, 72461 Albstadt (Truchtelf.) (DE)
(72) Erfinder: Zundel, Thomas, 72461 Albstadt (DE); Tschanun, Wolfgang, 6900 Bregenz/Lochau (AT); Fust, Patrick, 88212 Ravensburg (DE)
(74) Vertreter: Otten, Roth, Dobler & Partner mbB Patentanwälte

(56) Entgegenhaltungen:
- EP-A1- 0 796 951
- EP-A2- 2 093 339
- DE-A1- 10 343 970
- DE-A1- 19 520 082
- DE-C2- 2 359 607
- FR-A1- 2 572 439

## Beschreibung

Die Erfindung betrifft eine Beton-Stahl-Verbindung sowie ein Verfahren zu deren Herstellung nach den Ansprüchen 1 und 12.

### Stand der Technik:

Ausgangspunkt ist das Einbetonieren von Stahlverkleidungen bzw. von verlorenen Verschalungen im Allgemeinen. Diese eingegossenen Teile sind sogenannte verlorene Verschalungen da sie nach dem Betonieren nicht entfernt werden. Darunter sind auch Rohre allgemeiner Art, wie beispielsweise Pipelines und/oder Wasserversorgungen ( Vorzugsweise Rohre mit großem Durchmesser ) und/oder ähnliches zu verstehen. Durch den Aushärteprozess des Betons verliert dieser an Wasser und somit auch an Volumen, was zu Spalten und/oder sogar zu einer Lunkerbildung zwischen Verschalung und Beton führt.

Bisher wurde durch Zugabe von Additiven versucht, diesen Schwund möglichst gering zu halten. Jedoch treten selbst dabei kleinste Spalte zwischen den beiden Werkstoffen auf. Erkennbar sind diese Hohlräume beim Abklopfen mit einem Hammer durch einen recht grell klingenden Ton.

Da jedoch nicht feststellbar ist, wie groß dieser Luftspalt oder Lunker hinter dem Metall ist, muss die Verschalung bisher angebohrt und anschließend sehr flüssigem Beton (Betonmilch) oder alternativ ein Harz eingepresst werden.

Allerdings können mit dieser Methode zum einen die Lunker nicht zuverlässig behoben werden. Dies liegt zum einen daran, dass aufgrund schlechter Zugänglichkeit zu manchen Lunkern deren vollständige Füllung nicht möglich ist. Zum anderen ist die Beaufschlagung des Füllmaterials mit Druck begrenzt, so dass es auch aus diesem Grund nicht in alle Hohlräume einzudringen und diese auszufüllen vermag.

Bekannt ist auch, bereits vor dem Betonieren ein Verbundharz an der künftigen Verbindungsstelle zwischen Stahl und Beton einzubringen. Dieses "arbeitet" jedoch nicht über die primäre Aushärtezeit des Betons von ca. 28 Tagen, bis zum Erreichen der Normfestigkeit, mit und kann damit im Endeffekt die Spaltbildung nicht verhindern.

Die Probleme und die Nachteile durch diese Spaltbildung sind, beispielweise im Stahlwasserbau, Spannungsspitzen in den Strukturen durch ungleiche Verteilung eines von außen auf die Verschalung wirkenden Drucks, z.B. Druck durch Wasser.

Im Stand der Technik offenbart die DE 23 59 607 C2 ein Verfahren zur Herstellung von anorganisch-organischen Verbindungen, z. B. zur Herstellung von Formteilen in der Größe von 200 kg bis 1000 kg oder zum Auffüllen von Hohlräumen. Als besonders vorteilhaft wird die gezielte Beeinflußbarkeit der Topfzeit bzw. der Verarbeitungszeit hervorgehoben, die zwischen Sekunden und Stunden liegen kann.

Um länger verarbeitbare Massen, z.B. für Fugendichtungsmassen, Spachtelmassen, für Modellierarbeiten oder zur Formgebung von Plattenwaren, zum Prägen, Tiefziehen, Aufblasen, kurz für alle Bereiche, wo eine rasche industriell durchgeführte Fertigung in mehreren Stufen gewünscht ist, wird die Herstellung von flüssigen Massen vorgeschlagen, die nach einer bestimmten Topfzeit unter Viskositätsanstieg in einen viskosen, leicht verarbeitbaren Zustand übergehen, dessen weitere Aushärtung dann nur langsam vor sich geht, durch (einen nicht näher erläuterten) Hitzestoß jedoch rasch beendet werden können / werden soll.

Auch die Herstellung plastischer Massen, die über einen beliebig langen Zeitraum verarbeitbar sind und entweder durch Einarbeiten eines Härtungskytalysators oder durch Ausheizen härtbar sind, ist darin beschrieben.

Für die Herstellung von kompakten Formkörpern, Werkstoffen, vor allem für den Hoch-, Tief- und Möbelbau, sowie Schwerschaumstoffen wird der Zusatz von inerten Füllstoffen beschrieben. Die organische Komponente dient dabei als Binder für Kies, Split oder Grobsand, wobei der Füllstoff-Anteil bis zu 30.000 % der organischen Komponente betragen kann.

Zur Herstellung von Schaumstoffen wird die Mitverwendung von Treibmitteln oder die Zugabe von inerten Gasen, wie z.B. Luft, angegeben. Das Reaktionsgemisch kann dazu unter Druck mit dem Gas gesättigt werden, worauf es bei Entspannung expandiert.

Die Reaktionskomponenten werden hierzu in einer Mischvorrichtung vermischt und das Gemisch anschließend in Formen oder auf (nicht näher beschriebene) geeigneten Unterlagen aufschäumen und erstarren gelassen. Zur Erzielung der Reaktionstemperatur können z. B. die Reaktionskomponenten bereits vor dem Mischprozess vorgewärmt werden oder die Mischapparatur selbst beheizt oder das Reaktionsgemisch nach dem Mischen aufgeheizt werden.

Je nach Zusammensetzung und Struktur sei das erzielte so Verbundmaterial in der Lage, Wasser und/oder Wasserdampf aufzunehmen oder aber auch gegen Wasser und/oder Wasserdampf beträchtlichen Diffusionswiderstand aufzuweisen.

Als Anwendungsmöglichkeiten sind die Herstellung von Wandelementen im Fertigbau, verlorene Schalungen, Rollladenkästen, Fensterbänke, Eisenbahn- und U-Bahn-Schwellen, Bordsteine, Treppen, die Ausschäumung von Fugen sowie die Hinterschäumung von Keramikfliesen beschrieben. Durch eine Bindung von Kies oder Marmorstücken können dekorative Fassadenelemente hergestellt werden.

Zusammenfassend offenbart die DE 23 59 607 C2 somit Verfahren zur Herstellung von eigenständigen Formteilen unterschiedlichster Art, sowie langzeit-viskosestabile und dadurch in situ verarbeit- und unmittelbar anschließend aushärtbare Arbeitsmaterialien unter Verwendung von anorganisch-organischen Verbindungen.

Im Stand der Technik offenbart die DE 195 20 082 A1 eine verlorene Schalung zur Herstellung von Beton-Baukörpern mit mindestens zweit zueinander angeordneten Beton-Fertigplatten, die durch Abstandshalter miteinander verbunden sind und zugleich als Bewehrung für den entstehenden Baukörper dienen.

Die EP 0 796 951 A1 offenbart eine Tiefbaudichtung mit betonseitiger Beschichtung zur Abdichtung von nicht wasserdichten Bauwerken sowie ein Verfahren zur Herstellung einer Abdichtungslage unter Verwendung von Dichtungsbahnen mit betonseitiger Beschichtung.

Die DE 103 43 970 A1 offenbart ein Verfahren zur Behandlung von Frischbeton zum Schutz vor Verdunstung von nicht sogleich gebundenem Wasser, bei dem wesentliche Teile der Oberfläche eines erstellten Betonkörpers mit einem weitgehend dampfundurchlässigen Blattmaterial abgedeckt wird, dessen dem Betonkörper zugewandte Fläche in die noch weiche Betonmasse eindringt und darin haftende Strukturteile wie eine sandartig gekörnte Oberflächenstruktur, hinterschnittene Vorsprünge oder Fäden aufweist, und das Blattmaterial dauerhaft mit der Betonoberfläche verbunden bleibt, so dass das notwendige Restwasser im Betonkörper verbleibt. Der so gebildete Betonbauteil zeichnet sich dann dadurch aus, dass wesentliche Teile seiner Oberfläche mit dem Blattmaterial bedeckt sind, das mit dieser Oberfläche nur schwerlösbar verbunden ist.

Aufgabe und Vorteile der Erfindung:
Aufgabe der Erfindung ist es, bei sogenannten verlorenen Schalungen eine von Spalten und Lunkern weitgehend freie Verbindung zwischen Beton und Stahl sicherzustellen und dadurch zwischen dem Stahl und dem Beton auftretende Spannungen zu minimieren, sowie für eine gute Abdichtung zu sorgen.

Die Lösung der Aufgabe erfolgt durch die Merkmale der unabhängigen Ansprüche 1 und 12. In den abhängigen Ansprüchen sind vorteilhafte und zweckmäßige Weiterbildungen angegeben.

Dementsprechend betrifft die Erfindung ein Verfahren zur Herstellung einer Beton-Stahl-Verbindung, bei welcher zur Bildung einer Kräfte aufnehmenden und/oder übertragenden Struktur Schalmaterial aus Stahl mit Beton hintergossen wird, wobei zwischen dem Schalmaterial aus Stahl und dem zu hintergießenden Beton eine Zwischenschicht aus einem Füllmaterial angeordnet wird. Dieses Verfahren zeichnet sich dadurch aus, dass das Füllmaterial als Zweikomponentensystem aufgebracht wird, welches als erste Komponente ein, nach einer Anregung, sein Volumen vergrößerndes Material umfasst und als zweite Komponente einen Aktivator zur Anregung des Materials der ersten Komponente umfasst, der 20 Tage bis 40 Tage nach dem Hintergießen des Schalmaterials aus Stahl mit Beton aktiviert, das heißt zur Reaktion gebracht wird, so dass sich als Folge dieser Aktivierung das Füllmaterial (4.1) ausdehnt und dabei in Spalten und/oder Lunkern eindringt und diese zumindest teilweise, insbesondere weitgehend ausfüllt, welche Spalten und/oder Lunkern (5) sich seit dem Hintergießen des Betons zwischen dem Schalmaterial aus Stahl (2) und dem hintergossenen Beton (3) gebildet haben.

Das Zweikomponentensystem besteht aus wenigstens zwei Komponenten, wobei jede dieser Komponenten wiederum aus mehreren, insbesondere miteinander vermischten Komponenten bestehen kann.

Unter Schalmaterial werden in diesem Zusammenhang beispielsweise Platten, Wände und dgl. Bauteile, wie Kanalisierungselemente und/oder Rohre aus Stahl, insbesondere aus vergütetem Stahl, verstanden, z.B. zur offenen und/oder geschlossenen Wasserführung vorgesehene.

Aufgrund seines Verbleibens in der so herzustellenden Struktur nach dem Aushärten des Betons wird das Schalmaterial als verlorene Schalung bezeichnet.

Die Ausfüllung der Spalten und Lunker durch das Füllmaterial bewirkt zum einen in deren lokalen Flächenbereichen einen kraftschlüssigen und/oder Kraft übertragenden Materialübergang zwischen Stahl und Beton.

Zum anderen bewirkt die Ausfüllung der Spalten und Lunkern auch eine Abdichtung der Verbindung zwischen Stahl und Beton. Vorzugsweise gegen Eindringen von Flüssigkeiten, insbesondere gegen Wasser. Damit wird auch ein Schutz gegen Frost- und/oder Korrosionsschäden erreicht.

An dem Schalmaterial aus Stahl auftretende Spannungen, z. B. hervorgerufen durch Wasserdruck, können dadurch im Wesentlichen homogen auf die hintergossene, beispielsweise darunterliegende Betonschicht übertragen werden. Die Ausfüllung der Spalten und Lunkern durch die Zwischenschicht bewirkt somit eine großflächig durchgängige An- und/oder Auflage zwischen der Verschalung und dem Beton. Damit können Verformungen der Stahlstruktur im Betriebsfall verhindert werden.

Ein Anbohren dieser Stahlstrukturen, zur Einleitung von Füllmaterial nach dem Aushärten des Betons, ist dadurch nicht mehr erforderlich. Dies ist insbesondere deshalb vorteilhaft, da es sich bei solchen Stahlstrukturen meist um höchst präzise gefertigte Bauteile handelt, die andernfalls beschädigt werden könnten.

Im Weiteren entfällt dadurch auch die Gefahr, dass durch Einpressen von Füllmaterial zum Zwecke des Schließens solcher Spalte und Lunker das Bauteil deformiert und/oder aus seiner, vor dem Betonieren festgelegten Ausrichtung, gedrückt wird.

Mit der Aktivierung des Materials der ersten Komponente der Zwischenschicht beginnt dieses sich auszudehnen, in entstehende und/oder bereits entstandene Spalten und/oder Lunkern hineinzuwandern und diese auszufüllen.

Bevorzugt wird dabei ein Material mit einer sich ebenfalls über einen längeren Zeitraum, von z.B. bis zu drei Wochen oder länger, erstreckenden Ausdehnungseigenschaft für die Zwischenschicht verwendet. Dadurch kann das Material der Zwischenschicht sozusagen mit der Bildung der entstehenden Spalten und Lunkern mitwachsen.

Da sich Spalten und Lunkern jedoch oft erst mit zunehmendem Abbinde- und damit Aushärtezustand des Betons bilden und/oder vergrößern, was sich in der Regel über einen längeren Zeitraum von z.B. drei bis fünf Wochen erstrecken kann, wird in bevorzugter Weise das Füllmaterial nach dem Aushärten des Betons in einen Zustand, in dem üblicher Weise die Schalung entfernt werden kann, aktiviert.

Der Zeitpunkt einer Aktivierung ergibt sich aus der Materialeigenschaft des Betons, dadurch, dass ein sehr hoher Teil des Volumen- /Feuchtigkeitsschwundes nach 28 - 32 Tagen eingetreten ist. Der zeitliche Verlauf des Aushärteprozesses ist nicht nur von der Art des Betons abhängig, sondern auch vor allem von dessen Wassergehalt. Es gibt dazu recht divergierende Untersuchungen.

Gem. der Erfindung wurde aber festgestellt, dass ab einem Zeitraum von ca. drei Wochen nach dem Gießen des Betons dieser i.d.R. eine derartige Festigkeit erreicht hat, dass er ausgeschalt werden kann, weil sich seine Druckfestigkeit hinreichend einem bestimmten Wert angenähert hat.

Der Zeitpunkt des üblichen Ausschalens des Betons hat sich somit als ein guter Richtwert herausgestellt.

Bei diesem Verfahrensansatz kann auch mit vergleichsweise rascher sich ausdehnendem und/oder aushärtendem Material für die Ausbildung der Zwischenschicht gearbeitet werden.

In Tagen ausgedrückt kann das Füllmaterial z.B. nach 20 Tagen bis 40 Tagen aktiviert werden, vorzugsweise nach 28 Tagen bis 30 Tagen.

Die Aktivierung des Aktivators und damit als Folge auch die Aktivierung des Materials der ersten Komponente des Füllmaterials, also die Auslösung seiner Reaktion, erfolgt von außerhalb der herzustellenden Struktur. Z. B. durch einen gezielten Initiierungsvorgang, wie das Betätigen eines Schalters, des Starten eines Heizvorganges und/oder dgl. mehr.

Sie erfolgt somit durch ganz gezielt und von außerhalb der Struktur ausgelöste Zufuhr von Energie. Bis zu dieser Aktivierung nimmt das Material der Zwischenschicht dabei ein vergleichsweise geringes Volumen ein. Mit der Zufuhr von Energie kann der Beginn des Ausdehnungsprozess gezielt zum optimalsten Zeitpunkt aktiviert werden. Nämlich, wenn der Beton bereits nahezu vollständig seine Druckfestigkeit erreicht hat und somit weitestgehend ausgehärtet ist. Die Spalten und Lunkern sind zu diesem Zeitpunkt auf ihrem Maximum. Die Aktivierung zu diesem Zeitpunkt führt dadurch zu einer sicheren Beton-Stahl-Verbindung, um die auftretenden Spannungen zu minimieren. Diese Sicherheit führt ebenfalls zur Sicherstellung der Abdichtung gegen Eindringen von Flüssigkeiten in die Verbindung Beton-Stahl.

Abhängig von den Eigenschaften des verwendeten Materials kann zu dessen Aktivierung beispielsweise thermische Energie zugeführt/eingeleitet werden und/oder mechanische Energie und/oder elektrische Energie und/oder eine chemische Reaktion.

### Z. B. kann das Material dazu über einen

Aktivierungstemperaturpunkt hinaus erwärmt werden. Z.B. mittels einer Flamme oder einer anderen Wärmequelle, beispielsweise einem Strahler oder dgl. mehr.

Auch mittels Ultraschall kann eine Aktivierung des Materials der Zwischenschicht initiiert werden. Vorzugsweise durch die dabei eingebrachte Reibungswärme.

Auch durch Beaufschlagung mit einem Magnetfeld kann eine Aktivierung initiiert werden. Vorzugsweise erwärmt sich dabei das Schalmaterial aus Stahl und dieses erwärmt dann das Material der Zwischenschicht. Entsprechend kann auch mittels Beaufschlagung elektrischer Energie ausreichend Wärme zur Aktivierung des Materials der Zwischenschicht eingebracht werden.

### Material

Nachfolgend wird näher auf das verwendete Material eingegangen. Es sind dies vorzugsweise Füllmaterialien aus Kunststoff, welche ähnlich der bereits auf dem Bau eingesetzten Polyurethanschäume sind. Die wichtige zeitversetzte Aktivierung erfordert ein Zweistoff- oder Zweikomponentensystem, welches besonderen Anforderungen genügen muss.

Praktisch kann das Füllmaterial auf die verlorene Schalung (dem Stahl) in verschiedenen Formen vor dem Betonieren aufgebracht werden. Dies kann in zwei verschiedenen Ausführungen angedacht werden:
* als Folie
* und/oder als " gesprayte "/ aufgeschäumte Schicht.

Auf die Herstellung des Füllmaterials als Folie wird hier nicht näher eingegangen, da sie prinzipiell verfahrenstechnisch möglich ist, wie dies bei den meisten in Lösung hergestellten Materialien möglich ist. Die Folie selbst ist vorzugsweise einseitig leicht auf Eisen klebend ausführen, sodass deren Montage einfach durchgeführt werden kann.

Das aufzusprühende Material wird vorzugsweise aus einer Zweistoffdüse in recht gleichmäßiger Form auf der verlorenen Schalung aufgetragen.

Dies kann durch einfache prozesstechnische Mittel sichergestellt werden (automatisierte Spraydüsenführung ) und/oder zeitabhängiges sprühen/ " sprayen " mit Abstands- und Mengenkontrolle.

Die Mehrheitskomponente des Füllmaterialsystems setzt sich aus üblichen Bau - ( Polyurethan ) Schaum ( ähnlich einem sogenannten Brunnenschaum ) zusammen, die zweite Komponente des Füllmaterials wird mit der Mehrheitskomponente vermischt aufgetragen und macht mengenmäßig circa 10 Volumenprozent aus.

Mengenmäßig ist das größere Materialsystem ( das Trägermaterial ) sehr fein stöchiometrisch auf zweite System abgestimmt, sodass nur wenige / sehr geringe Kreuzreaktionen unter den eingesetzten Materialien nach dem Aufbringen im zweiten ( PU - ) Materialsystem auftreten.

Die Mehrheitskomponente ist ein sogenannter offenzelliger Schaum, dessen Blasen zu einem hohen Grad miteinander verbunden sind und teilweise von der zweiten Komponente beim Aufschäumen gefüllt werden / dessen Blasen vollständig schließt.

Dies ist wichtig, wird so ein eindiffundieren von Flüssigkeiten ( Wasser ) weitestgehend unterbunden. Die Mehrheitskomponente für die Grundmatrix ist dadurch gekennzeichnet, dass sie aus Grundmaterial, Vernetzungsmaterial, Aktivator und Schaumformer besteht. Das Grundmaterial ist, vorzugsweise aus Materialien wie Dimethylmethanisocyanat und dessen Isomeren und Homologenen und/oder ähnlichem aufgebaut und mit der Vernetzungs - Komponente Dimethylether und/oder ähnlichem zusammengesetzt.

Als Treibmittel kann Propan oder ähnliches gewählt werden. Zum Formen der Mikro / Blasenstruktur ( Schaumformer ) kann 2-Eethylpropandiol-1,3-Diol oder 5-Ethyl-1,3,-Dioxan-5- Methanol oder Propylidynetrimethanol und/oder ähnliches eingesetzt werden, dazu sind nur wenige Mengenprozente nötig.

Als zweite Füllmaterialkomponente kann ein Klebeschhaum ähnliches Material basierend auf 2-Hydroxypropylmethacrylat ( siehe: https://pubchem.ncbi.nlm.nih.gov/compound/13539 ) angedacht werden, als dessen Reaktionspartner ( Vernetzungskomponente ) kann man 1,4-Butandiol-dimethacrylat (siehe: https://pubchem.ncbi.nlm.nih.gov/compound/16387 ) und/oder ähnliches sein.

Die zur Aktivierung erforderliche Reaktion wird durch einen vorzugsweise mikrogekapselten Aktivator ausgelöst; beispielsweise Dicyclohexylphthalat und/oder Diisopropanol-p-toluidin und/oder ähnliches bewerkstelligt die gewünschte Aufschäumung nach dem Auslösen der Aktivierung - um die entstandenen Lunker / Zwischenräume zwischen Eisen und Beton auszufüllen.

Da diese mit einem Zeitverzug im Füllmaterial durchgeführt wird, ist dessen Aktivierungsverhalten prozeßkritisch und sorgfältig zu überwachen.

Das Auslösen dieser Aktivierung kann über thermische, mit Ultraschall - und sonstigem Energieformen erfolgen; dies muß jedoch sehr selektiv auf die zweite Füllmaterialkomponente abgestimmt sein.

Da sich Spalten und Lunker jedoch erst mit zunehmendem Abbinde- und damit Aushärtezustand des Betons bilden und/oder vergrößern, was sich in der Regel über einen längeren Zeitraum von z.B. drei bis fünf Wochen erstrecken kann, wird in bevorzugter Weise das Füllmaterial erst nach weitestgehendem Aushärten des Betons aktiviert.

Auch durch die Initiierung einer chemischen Reaktion kann ein Ausdehnen des Materials der Zwischenschicht angestoßen werden. Z. B. durch die chemische Reaktion an sich und/oder auch durch dabei entstehende Wärme.

Als Füllmaterial kann somit z.B. ein Kunststoff verwendet werden, insbesondere ein schäumfähiger Kunststoff, welcher die in Eigenschaften genannten Funktionen hat. Z.B. in der Form eines Schaums oder dgl. Vorzugsweise weist deren Oberfläche eine mit dem Beton und/oder mit der Schalungsseite sehr stabile Bindung eingehende Wirkung auf.

Bevorzugt weist dieses Material spritz- und/oder streichfähige Eigenschaften auf. Durch die Verwendung von spritz- und/oder streichfähigem Füllmaterial kann dieses beim Auftragen, z.B. auf das Schalmaterial aus Stahl, in bereits vorhandene Unebenheiten und Vertiefungen eindringen und sich Abstandsfrei - und somit unter Vermeidung von präprozessalen Hohlräumen und/oder Verbindungslücken - mit dem betreffenden Untergrund verbinden.

Mit anderen Worten kann sich das aufzutragende Material der Zwischenschicht vollflächig mit dem betreffenden Untergrund, i. d. R. dem Schalmaterial aus Stahl, verbinden. Anschließend wird der Beton hinter das Schalmaterial aus Stahl gegossen, um dieses später abzustützen und die auf das Schalmaterial aus Stahl von der anderen Seite her wirkenden Kräfte aufzunehmen. Z.B. den durch Wasser in einer Wehr oder dgl. herrührenden Druck.

Vorzugsweise wird als erste Komponente des Füllmaterials ein sogenannter offenzelliger Schaum verwendet, dessen Blasen zu einem hohen Grad miteinander verbunden sind und teilweise von der zweiten Komponente, dem Aktivator, beim Aufschäumen gefüllt und/oder vollständig verschlossen werden.

Für die zweite Komponente des Füllmaterials, den Aktivator, kann ein Klebeschaum ähnliches Material basierend auf 2-Hydroxypropylmethacrylat verwendet werden.

Als Reaktionspartner kann für den Aktivator 1,4-Butandiol-dimethacrylat verwendet werden.

Die zur Aktivierung erforderliche Reaktion wird durch einen vorzugsweise mikrogekapselten Aktivator ausgelöst, insbesondere durch Dicyclohexylphthalat.

Erläuterung zu den genannten Chemikalien:
Die erste Chemikalie die bei den Materialien genannt wird ist Dimethyl-Methan-Isocyanat.

Dimethylmethanisocyanat = Dimethyl-Methan-Isocyanat.

Hierbei handelt es sich um Polyetherpolyolen, wobei, mindestens ein hydroxylgruppenhaltiger Fettsäureester und/ oder mindestens ein hydroxylmodifizierter Fettsäureester unter Zuhilfenahme eines Doppelmetallcyanid-Katalysators in mindestens zwei Verfahrensabschnitten mit jeweils einem Gemisch aus Ethylenoxid und mindestens einem weiteren von Ethylenoxid verschiedenen Alkylenoxid zur Reaktion gebracht wird.

Molekulare Formel CH3OCH3 Dimethyl ether wird als Triebmittel benutzt.

Die dritte genannte Chemikalie ist Propan.

Als vierte Chemikalie, dem Schaumformer, wird gewählt:
2 - Eethylpropandiol-1,3-Diol:
   5-Ethyl-1,3,-Dioxan-5- Methanol:
   Propylidynetrimethanol:
   Eingesetzt auch als Kleber in Klebeverbindungen und Bindemittel und als Baumaterial als Füller, Härter und Additiv für Produkte zur Unterstützung deren Härtung, verwendet in Farben und Firnissen, Plastik, etc. Füller. Verwendet wird es auch als/zum Plastikmaterial und Harzherstellung.
2-Hydroxypropylmethacrylat:
   Da 2-Hydroxypropylmethacrylat über eine freie Hydroxygruppe verfügt, kann es genutzt werden, um Hydroxygruppen in Harze einzubauen. Diese Gruppen stehen dann für Härtungsreaktionen mit Isocyanaten oder Harnstoffharzen zur Verfügung.[3]

Dicyclohexylphthalat:
Verwendung:
Dicyclohexylphthalat wird als Weichmacher von Kunstharzen (z. B. für PVC, Epoxid- und Polyester-Harze) verwendet. Dafür wird es häufig im Gemisch mit Dibenzoylperoxid eingesetzt. In Alkydharzen und Cellulosenitraten verbessert er die Licht- und Wetterstabilität, in Kunststoffen die chemischen und physikalischen Eigenschaften.

Die Aufgabe wird auch gelöst durch eine Beton-Stahl-Verbindung, bei welcher zur Bildung einer Kräfte aufnehmenden und/oder übertragenden Struktur Schalmaterial aus Stahl mit Beton hintergossen ist, wobei zwischen dem Schalmaterial aus Stahl, welches aufgrund seines Verbleibens in der so herzustellenden Struktur nach dem Aushärten des Betons als verlorene Schalung bezeichnet wird, und dem hintergossenen Beton eine Zwischenschicht aus einem Füllmaterial zur Ausfüllung von Spalten und/oder Lunkern angeordnet ist. Diese zeichnet sich dadurch aus, dass das Füllmaterial als Zweikomponentensystem ausgebildet ist, welches als erste Komponente ein, nach einer Anregung, sein Volumen vergrößerndes Material umfasst und als zweite Komponente einen Aktivator zur Anregung des Materials der ersten Komponente umfasst, und aufgrund einer nach dem Vergießen des Betons erfolgten Aktivierung im Volumen in der Art expandiert ist, dass es dabei in die Spalten und/oder Lunkern eingedrungen ist und diese zumindest teilweise ausfüllt.

Bei den Spalten und/oder Lunkern handelt es sich überwiegend um beim Aushärten des Betons entstandene Spalten und/oder Lunkern.

Nochmals Bezug nehmend auf den Aktivierungsvorgang der zu aktivierenden Schicht ( Folie ), welcher auch als "feuern" bezeichnet werden kann, können folgende Anregungsformen vorgesehen werden, einzeln oder auch in Kombination miteinander:
* Thermisch

Das Material / die Schicht kann über ein Widerstandsnetz auf eine erhöhte Temperatur gebracht werden, welche über die thermische Anregung den Beginn des Ausschäumens starten läßt.

### * Elektromagnetische Strahlung ( einschließlich LASER )

Durch die schalungsseitige Begrenzung kann mit einer hohen Feldstärke / Frequenz in der dahinter liegenden Schicht / Folie ein Ausschäumprozeß gestartet werden, z. B. unterstützt von einem thermischen Effekt in der Schalung. Besonders langwellige LASER haben eine ausreichende Eindringtiefe und eignen sich daher besonders für die Anregung an vorbestimmten Orten.

### * Magnetische Anregung

Beispielsweise können durch ein starkes Magnetfeld in und hinter der Schalung magnetische Partikel zur Anregung ( freisetzen ) einer entsprechenden chem. Substanzen benutzt werden. Z.B. durch freisetzen eines entsprechenden Katalysators.

### * Anregung durch Teilchenstrahlen

Eine Anregung durch Teilchenstrahlung hat den Vorteil einer gezielten Lenkung des ( flächigen ) Anregungsprozesses. Ionisierende oder neutrale Teilchenstrahlung kann ganz gezielt an vorgewählten Orten durch die Schalung eingebracht werden.

### * Schall ( Ultraschall ), andere mechanische Anregungen ( Druckwellen )

Ultraschall ermöglicht auf Grund seiner Bündelung und Energiedichte ebenfalls die Schicht anzuregen und zu feuern, sodaß die Lunker ausgefüllt werden. Dies ermöglicht auch noch qualitativ den Prozeß über geeignete Detektoren mitzuverfolgen.

### * Direkte Anregung durch Strom

Ein eingelegtes Gitter kann mit einer elektrischen Spannung gegenüber Erde beaufschlagt werden und so durch den entstehenden Strom die Schicht zum feuern gebracht werden.

### * Anregung durch Randeffekte

Am offenen Rand der Schalung ist die Schicht / Folie frei zugänglich. Durch eine entsprechend gewählte Anregung kann durch weiteres eindiffundieren in die abgedeckte Struktur die gesamte Schicht / Folie zum Aufschäumen gebracht werden. Die entstehenden Fronten der Diffusion können mit vorgenannten Möglichkeiten sogar bedingt gesteuert werden.

Beschreibung eines Ausführungsbeispiels:
Nachfolgend wird die Erfindung unter Bezugnahme auf die beigefügten Figuren näher beschrieben.

Es zeigen bespielhaft und schematisch:
- Figur 1:: ein Schalmaterial aus Stahl mit einer, nach der Herstellung einer Beton-Stahl-Verbindung als Zwischenschicht fungierenden, auf das Schalmaterial aufgebrachten Schicht,
- Figur 2:: das Schalmaterial mit Zwischenschicht aus Figur 1 und mit hintergossenem Beton,
- Figur 3:: das Schalmaterial mit Zwischenschicht aus Figur 1 und hintergossenem Beton, sowie einem zwischen der Zwischenschicht und dem Beton ausgebildeten Spalt oder Lunker,
- Figur 4:: eine Darstellung wie in Fig. 3, jedoch mit ausgefülltem Spalt bzw. Lunker, und
- Figur 5:: eine Darstellung wie in Fig. 4 und zusätzlich an der dem Beton gegenüberliegenden Seite des Schalmaterials anstehendem Wasser.

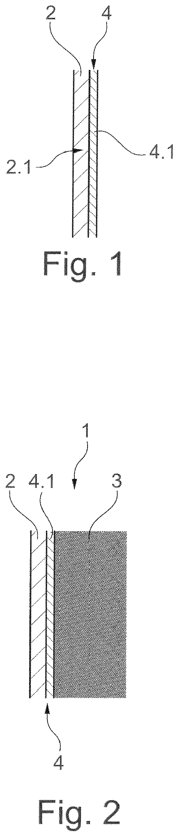

Im Detail zeigt die **Figur 1** ein Schalmaterial 2 aus Stahl zur Herstellung einer Beton-Stahl-Verbindung 1, bei welcher zur Bildung einer Kräfte aufnehmenden und/oder übertragenden Struktur das Schalmaterial aus Stahl, wie in den nachfolgenden Figuren dargestellt, mit Beton 3 hintergossen wird. Die Größenverhältnisse der einzelnen Komponenten dieser Struktur sind nicht maßstäblich. Es handelt sich bei diesen Figuren um rein beispielhafte und schematische Darstellungen.

An der dem nachfolgend zu hintergießenden Beton zugewandten Seite 2.1 des Schalmaterials 2 ist ein Füllmaterial 4.1 angeordnet. An dieses angrenzend wird zur Herstellung einer Stütze für das Schalmaterial 2 Beton 3 gegossen. Beim Aushärten des Betons entstehen Hohlräume zwischen dem Beton 3 und dem Schalmaterial 2 aus Stahl in der Form von Spalten und/oder Lunkern 5.

Das Füllmaterial 4.1 bildet, nach dem Hintergießen des Schalmaterials 2 mit Beton 3, eine Zwischenschicht 4 zwischen dem Schalmaterial 2 und dem Beton 3, zur nachfolgenden Ausfüllung dieser Spalten und/oder Lunkern 5 (vgl. Fig. 2 bis 5).

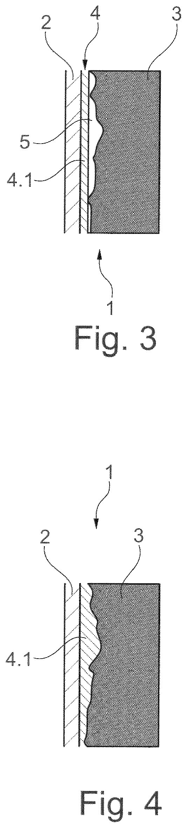

Hierfür wird das Füllmaterial 4.1 nach Beginn des Aushärtens des Betons 3 in der Weise aktiviert, dass es sich als Folge der Aktivierung ausdehnt und dabei in die Spalten und/oder Lunkern 5 eindringt und diese zumindest teilweise ausfüllt (vgl. Fig. 3 bis 5).

Die **Figur 2** zeigt den Zustand der Beton-Stahl-Verbindung 1 unmittelbar nach dem Betonieren. Hier liegt der Beton dicht an dem die Zwischenschicht 4 bildenden Füllmaterial 4.1 an. Es ist noch keine Spaltbildung festzustellen.

In **Figur 3** ist der Zustand der Beton-Stahl-Verbindung 1 nach dem Aushärten des Betons, mit etwa 28 Tagen Aushärtezeit dargestellt. Hier ist nun deutlich ein Hohlraum zwischen dem Füllmaterial 4.1 und dem Beton 3 in der Form eines Spaltes oder Lunkers 5 erkennbar.

Das Füllmaterial 4.1 ist auf dem Schalmaterial 2 aufgetragen, vorzugsweise aufgespritzt und/oder aufgestrichen. Dadurch kann es über die gesamte, für die Bildung der Beton-Stahl-Verbindung 1 relevante Fläche des Schalmaterials 2 abstands- und hohlraumfrei auf diesem aufgetragen bzw. mit diesem verbunden werden. D.h., zu dieser Seite hin ist, nach der Aktivierung des Füllmaterials 4.1, i.d.R. kein Hohlraum mit Material zu füllen.

Ggf. am Schalmaterial 2 aus Stahl vorhandene Unebenheiten und/oder Vertiefungen werden bereits beim Auftragen des Füllmaterials 4.1 durch dieses ausgefüllt. Die Expansionswirkung des Füllmaterials 4.1 steht dadurch im Grunde vollständig zur Ausfüllung von im Beton entstehenden Hohlräumen zur Verfügung.

Der Zustand der Beton-Stahl-Verbindung 1 nach dem durch die Aktivierung erfolgten Ausdehnen des Füllmaterials 4.1 der Zwischenschicht 4 ist in der **Figur 4** gezeigt. Durch das Aufquellen füllt dieses die Spalte und/oder Lunker 5 zwischen Schalmaterial 2 aus Stahl und dem Beton 3 kraftübertragend und vorzugsweise vollständig aus.

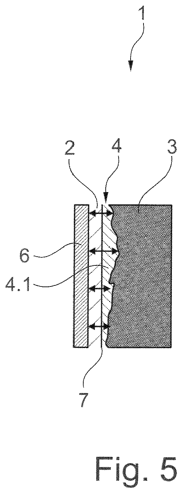

Im späteren Betriebszustand kann, wie in **Figur 5** durch die beispielhaft eingezeichneten Doppelpfeile 7 dargestellt, dadurch der Druck durch Wasser 6, über diese Zwischenschicht 4, homogen auf die darunter liegende Betonstruktur 3 übertragen und von dieser abgestützt werden.

Außerdem bewirkt diese Hohlraum ausfüllende Ausdehnung des Füllmaterials 4.1 der Zwischenschicht 4 eine Abdichtung des Verbindungsbereichs zwischen Beton 3 und dem Schalmaterial 2, und schützt dadurch die Beton-Stahl-Verbindung 1 gegen Einwirkungen an dieser Stelle der Struktur. Z. B. gegen Frost- und Korrosionsschäden, z.B. durch eingedrungenes Wasser oder dgl.

### Bezugszeichenliste:

- 1: Beton-Stahl-Verbindung
- 2: Schalmaterial
- 2.1: Seite
- 3: Beton
- 4: Zwischenschicht
- 4.1: Füllmaterial
- 5: Spalt und/oder Lunker
- 6: Wasser
- 7: Doppelpfeil

## Patentansprüche

1. Verfahren zur Herstellung einer Beton-Stahl-Verbindung (1), bei welcher zur Bildung einer Kräfte aufnehmenden und/oder übertragenden Struktur Schalmaterial (2) aus Stahl mit Beton (3) hintergossen wird, wobei zwischen dem Schalmaterial (2) aus Stahl, welches nach dem Aushärten des Betons (3) in der herzustellenden Struktur verbleibt, und dem zu hintergießenden Beton eine Zwischenschicht (4) aus einem Füllmaterial (4.1) angeordnet wird, **dadurch gekennzeichnet, dass** das Füllmaterial (4.1) als Zweikomponentensystem aufgebracht wird, welches als erste Komponente ein, nach einer Anregung, sein Volumen vergrößerndes Material umfasst und als zweite Komponente einen Aktivator zur Anregung des Materials der ersten Komponente umfasst, der 20 Tage bis 40 Tage nach dem Hintergießen des Schalmaterials aus Stahl mit Beton (3) aktiviert, das heißt zur Reaktion gebracht wird, so dass sich als Folge dieser Aktivierung das Füllmaterial (4.1) ausdehnt und dabei in Spalten und/oder Lunkern (5) eindringt und die Spalten und/oder Lunkern (5) zumindest teilweise ausfüllt, welche sich seit dem Hintergießen des Betons zwischen dem Schalmaterial aus Stahl (2) und dem hintergossenen Beton (3) gebildet haben.

2. Verfahren nach Anspruch 1, **dadurch gekennzeichnet, dass** der Aktivator für die erste Komponente des Füllmaterials (4.1) 28 Tage bis 30 Tage nach dem Hintergießen des Betons (3) aktiviert wird.

3. Verfahren nach Anspruch 1 oder 2, **dadurch gekennzeichnet, dass** die Aktivierung des Aktivators, also die Auslösung seiner Reaktion, von außerhalb der herzustellenden Struktur erfolgt.

4. Verfahren nach einem der vorangehenden Ansprüche, **dadurch gekennzeichnet, dass** die Aktivierung des Aktivators durch Zufuhr von Energie erfolgt.

5. Verfahren nach einem der vorangehenden Ansprüche, **dadurch gekennzeichnet, dass** zur Aktivierung thermische Energie zugeführt wird und/oder mechanische Energie zugeführt wird und/oder elektrische Energie zugeführt wird und/oder eine chemische Reaktion eingeleitet wird.

6. Verfahren nach einem der vorangehenden Ansprüche, **dadurch gekennzeichnet, dass** als Füllmaterial (4.1) Kunststoff, insbesondere in der Form einer Folie und/oder eines schäumfähigen Kunststoffs verwendet wird.

7. Verfahren nach einem der vorangehenden Ansprüche, **dadurch gekennzeichnet, dass** spritz- und/oder streichfähiges Füllmaterial (4.1) verwendet wird.

8. Verfahren nach einem der vorangehenden Ansprüche, **dadurch gekennzeichnet, dass** als erste Komponente des Füllmaterials ein sogenannter offenzelliger Schaum verwendet wird, dessen Blasen zu einem hohen Grad miteinander verbunden sind und teilweise von der zweiten Komponente, dem Aktivator, beim Aufschäumen gefüllt und/oder vollständig verschlossen werden.

9. Verfahren nach einem der vorangehenden Ansprüche, **dadurch gekennzeichnet, dass** für die zweite Komponente des Füllmaterials, den Aktivator, ein Klebeschaum ähnliches Material basierend auf 2-Hydroxypropylmethacrylat verwendet wird.

10. Verfahren nach einem der vorangehenden Ansprüche, **dadurch gekennzeichnet, dass** als Reaktionspartner für den Aktivator 1,4-Butandiol-dimethacrylat verwendet wird.

11. Verfahren nach einem der vorangehenden Ansprüche, **dadurch gekennzeichnet, dass** die zur Aktivierung erforderliche Reaktion durch einen mikrogekapselten Aktivator ausgelöst wird, insbesondere durch Dicyclohexylphthalat.

12. Beton-Stahl-Verbindung (1), bei welcher zur Bildung einer Kräfte aufnehmenden und/oder übertragenden Struktur Schalmaterial (2) aus Stahl mit Beton (3) hintergossen ist,
wobei zwischen dem Schalmaterial (2) aus Stahl, welches nach dem Aushärten des Betons (3) in der herzustellenden Struktur verbleibt, und dem hintergossenen Beton eine Zwischenschicht (4) aus einem Füllmaterial (4.1) angeordnet ist, **dadurch gekennzeichnet, dass** das Füllmaterial (4.1) als Zweikomponentensystem ausgebildet ist, welches als erste Komponente ein, nach einer Anregung, sein Volumen vergrößerndes Material umfasst und als zweite Komponente einen Aktivator zur Anregung des Materials der ersten Komponente umfasst, und aufgrund einer 20 Tage bis 40 Tage nach dem Vergießen des Betons (3) erfolgten Aktivierung, das heißt zur Reaktion Bringung des Aktivators, im Volumen in der Art expandiert ist, dass es dabei in die Spalten und/oder Lunkern (5) eingedrungen ist und diese zumindest teilweise ausfüllt, welche Spalten und/oder Lunkern (5) sich seit dem Hintergießen des Betons zwischen dem Schalmaterial aus Stahl (2) und dem hintergossenen Beton (3) gebildet haben.

13. Beton-Stahl-Verbindung nach Anspruch 12, **dadurch gekennzeichnet, dass** es sich bei den Spalten und/oder Lunkern (5) um beim Aushärten des Betons (3) entstandene Spalten und/oder Lunkern handelt.

## Claims

1. Method for producing a concrete-steel connection (1), wherein, for the purpose of forming a structure which transmits and/or accommodates forces, steel formwork material (2) is back-cast with concrete (3), where an intermediate layer (4) of a filling material (4.1) is disposed between the steel formwork material (2), which remains in the structure under production, after the curing of the concrete (3), and the concrete for back-casting, **characterized in that** the filling material (4.1) is applied in the form of a two-component system which comprises as the first component a material which increases its volume after excitation and comprises as the second component an activator for exciting the material of the first component, the activator being activated, in other words brought to reaction, 20 days to 40 days after the back-casting of the steel formwork material with concrete (3), so that as a consequence of this activation the filling material (4.1) expands and, in so doing, penetrates gaps and/or cavities (5) and at least partly fills the gaps and/or cavities (5) which have formed between the steel formwork material (2) and the back-cast concrete (3) after the back-casting of the concrete.

2. Method according to Claim 1, **characterized in that** the activator for the first component of the filling material (4.1) is activated 28 days to 30 days after the back-casting of the concrete (3).

3. Method according to Claim 1 or 2, **characterized in that** the activation of the activator, i.e. the triggering of its reaction, takes place from outside the structure under production.

4. Method according to any of the preceding claims, **characterized in that** the activation of the activator takes place by supply of energy.

5. Method according to any of the preceding claims, **characterized in that**, for the activation, thermal energy is supplied and/or mechanical energy is supplied and/or electrical energy is supplied and/or a chemical reaction is initiated.

6. Method according to any of the preceding claims, **characterized in that** filling material (4.1) used comprises plastic, more particularly in the form of a film and/or of a foamable plastic.

7. Method according to any of the preceding claims, **characterized in that** sprayable and/or spreadable filling material (4.1) is used.

8. Method according to any of the preceding claims, **characterized in that** a so-called open-cell foam in which the bubbles are connected to one another to a high degree and, during foaming, are partly filled and/or completely sealed by the second component, the activator, is used for the first component of the filling material.

9. Method according to any of the preceding claims, **characterized in that** a material similar to adhesive foam and based on 2-hydroxypropyl methacrylate is used for the second component of the filling material, the activator.

10. Method according to any of the preceding claims, **characterized in that** the co-reactant used for the activator is 1,4-butanediol dimethacrylate.

11. Method according to any of the preceding claims, **characterized in that** the reaction required for activation is triggered by a microencapsulated activator, more particularly by dicyclohexyl phthalate.

12. Concrete-steel connection (1) wherein, for the purpose of forming a structure which transmits and/or accommodates forces, steel formwork material (2) is back-cast with concrete (3), wherein an intermediate layer (4) of a filling material (4.1) is disposed between the steel formwork material (2), which remains in the structure under production, after the curing of the concrete (3), and the back-cast concrete, **characterized in that** the filling material (4.1) is configured as a two-component system which comprises as the first component a material which increases its volume after excitation and comprises as the second component an activator for exciting the material of the first component, and which has expanded in volume on the basis of an activation having taken place 20 days to 40 days after the casting of the concrete (3), activation meaning the bringing to reaction of the activator, the expansion in volume being such that in this process the material has penetrated the gaps and/or cavities (5) and at least partly filled them, the said gaps and/or cavities (5) having formed between the steel formwork material (2) and the back-cast concrete (3) after the back-casting of the concrete.

13. Concrete-steel connection according to Claim 12, **characterized in that** the gaps and/or cavities (5) are gaps and/or cavities formed in the course of the curing of the concrete (3).

## Revendications

1. Procédé de réalisation d'une liaison béton-acier (1) dans laquelle un matériau de coffrage (2) en acier est doublé par coulage de béton (3) afin de former une structure qui absorbe et/ou transmet des forces, une couche intermédiaire (4) d'un matériau de remplissage (4.1) étant disposée entre le matériau de coffrage (2) en acier, qui reste dans la structure à réaliser après le durcissement du béton (3), et le béton à couler, **caractérisé en ce que** le matériau de remplissage (4.1) est appliqué sous la forme d'un système à deux composants qui comprend comme premier composant un matériau qui augmente de volume après stimulation et comme deuxième composant un activateur qui est destiné à stimuler le matériau du premier composant et qui est activé, c'est-à-dire mis à réagir, 20 jours à 40 jours après le doublage du matériau de coffrage en acier par coulage du béton (3) de sorte que, à la suite de cette activation, le matériau de remplissage (4.1) se dilate et pénètre ainsi dans les interstices et/ou cavités (5) et remplisse au moins partiellement les interstices et/ou cavités (5) qui se sont formés entre le matériau de coffrage (2) en acier et le béton coulé (3) depuis que le béton a été coulé.

2. Procédé selon la revendication 1, **caractérisé en ce que** l'activateur du premier composant du matériau de remplissage (4.1) est activé 28 jours à 30 jours après le coulage du béton (3).

3. Procédé selon la revendication 1 ou 2, **caractérisé en ce que** l'activation de l'activateur, c'est-à-dire le déclenchement de sa réaction, est effectuée depuis l'extérieur de la structure à réaliser.

4. Procédé selon l'une des revendications précédentes, **caractérisé en ce que** l'activation de l'activateur est effectuée par apport d'énergie.

5. Procédé selon l'une des revendications précédentes, **caractérisé en ce qu'**un apport d'énergie thermique et/ou d'énergie mécanique et/ou d'énergie électrique et/ou un déclenchement d'une réaction chimique sont effectués pour l'activation.

6. Procédé selon l'une des revendications précédentes, **caractérisé en ce qu'**une matière synthétique, se présentant notamment sous la forme d'un film et/ou d'une matière synthétique apte au moussage est utilisée comme matériau de remplissage (4.1).

7. Procédé selon l'une des revendications précédentes, **caractérisé par** l'utilisation d'un matériau de remplissage (4.1) pulvérisable et/ou étalable.

8. Procédé selon l'une des revendications précédentes, **caractérisé en ce qu'**une mousse dite à cellules ouvertes, dont les bulles sont fortement liées entre elles et partiellement remplies par le deuxième composant, l'activateur, pendant le moussage et/ou complètement fermées, est utilisée comme premier composant du matériau de remplissage.

9. Procédé selon l'une des revendications précédentes, **caractérisé en ce qu'**un matériau de type mousse adhésive à base de méthacrylate de 2-hydroxypropyle est utilisé pour le deuxième composant du matériau de remplissage, l'activateur.

10. Procédé selon l'une des revendications précédentes, **caractérisé en ce que** le diméthacrylate de 1,4-butanediol est utilisé comme réactif pour l'activateur.

11. Procédé selon l'une des revendications précédentes, **caractérisé en ce que** la réaction nécessaire à l'activation est déclenchée par un activateur microencapsulé, notamment par du phtalate de dicyclohexyle.

12. Liaison béton-acier (1), dans laquelle un matériau de coffrage (2) en acier est doublé par coulage de béton (3) afin de former une structure qui absorbe et/ou transmet des forces, une couche intermédiaire (4) d'un matériau de remplissage (4.1) étant disposée entre le matériau de coffrage (2) en acier, qui reste dans la structure à réaliser après le durcissement du béton (3), et le béton à couler, **caractérisée en ce que** le matériau de remplissage (4.1) est appliqué sous la forme d'un système à deux composants qui comprend comme premier composant un matériau qui augmente de volume après stimulation et comme deuxième composant un activateur qui est destiné à stimuler le matériau du premier composant et qui est expansé en volume par activation, c'est-à-dire réaction, de l'activateur 20 jours à 40 jours après le coulage du béton (3) de manière à pénétrer ainsi dans les interstices et/ou cavités (5) et les remplir au moins partiellement, lesquels interstices et/ou cavités (5) se sont formés entre le matériau de coffrage (2) en acier et le béton coulé (3) depuis que le béton a été coulé.

13. Liaison béton-acier selon la revendication 12, **caractérisée en ce que** les interstices et/ou cavités (5) sont des interstices et/ou cavités qui se sont formés lors du durcissement du béton (3).
